# EUROPEAN PATENT APPLICATION

(11) **EP 4 318 297 A1**
(43) Date of publication of application: **07.02.2024**
(21) Application number: 22780371.5
(22) Date of filing: 23.03.2022
(51) Int. Cl.: G06F 30/18, G06F 113/14

(54) **PROGRAM, METHOD, AND SYSTEM**

(30) Priority: 31.03.2021 JP 2021060917
(71) Applicant: Plantstream Inc., Tokyo 104-0032 (JP)
(72) Inventor: OHKITA Naohisa, Tokyo 104-0032 (JP); TANAKA Hideo, Tokyo 104-0032 (JP); NARUE Seitaro, Yokohama-shi, Kanagawa 220-8765 (JP); SAKAI Fumiaki, Yokohama-shi, Kanagawa 220-8765 (JP)
(74) Representative: AWA Sweden AB
(86) International application number: PCT/JP2022/013477
(87) International publication number: WO 2022/210156

(57) **Abstract**

A program of the present disclosure is executed by a computer including a processor to automatically and manually route piping, and causes the processor to execute a step of receiving an input of designated coordinates for a piping line routed so as to connect a plurality of instruments constituting a plant to each other in a virtual space for designing the plant, and a step of assigning a plurality of pieces of identification information to the piping line using the input designated coordinates as a boundary.

## Description

### TECHNICAL FIELD

The present disclosure relates to a program, a method, and a system.

### BACKGROUND

Techniques for generating a piping route in a plant are known.

Patent Literature 1 describes a piping route generation method executed by a computer device in order to generate a piping route in a plant in which obstacles such as a plurality of instruments are arranged.

### CITATION LIST

### PATENT LITERATURE

Patent Literature 1: Japanese Unexamined Patent Application Publication No. 2007-219988

### SUMMARY

### TECHNICAL PROBLEM

In a virtual space for plant design, when information on an attribute of piping is input for a routed piping line, there has been a need to input different attributes using a specific material in the piping line as a boundary.

In addition, when piping is routed, there has been a need to designate any coordinates in a space and identify the coordinates so that the piping passes through the coordinates.

Thus, there has been a need for a function to designate any coordinates in a virtual space for plant design.

### SOLUTION TO PROBLEM

A program of the present disclosure is executed by a computer including a processor to automatically and manually route piping, and causes the processor to execute a step of receiving an input of designated coordinates for a piping line routed so as to connect a plurality of instruments constituting a plant to each other in a virtual space for designing the plant.

### ADVANTAGEOUS EFFECTS OF INVENTION

According to the present disclosure, any coordinates can be designated in a virtual space for plant design.

### BRIEF DESCRIPTION OF THE DRAWINGS

FIG. 1 shows an overall configuration of a system of the present invention.
FIG. 2 is a block diagram showing a functional configuration of a terminal apparatus constituting the system of the present invention.
FIG. 3 is a diagram showing a functional configuration of a server constituting the system of the present invention.
FIG. 4 is a diagram showing an example data structure of a material database stored in a server.
FIG. 5 is a diagram showing an example data structure of an instrument database stored in the server.
FIG. 6 is a diagram showing an example data structure of an instrument position information database stored in the server.
FIG. 7 is a diagram showing an example data structure of a design space database stored in the server.
FIG. 8 is a diagram showing an example data structure of an instrument position information database stored in the server.
FIG. 9 is a diagram showing an example data structure of a piping line information database stored in the server.
FIG. 10 is a diagram illustrating a flow of line break processing in the system of the present invention.
FIG. 11 is a diagram illustrating a flow of routing processing using a path point in the system of the present invention.
FIG. 12 is a diagram illustrating a flow of routing processing additionally using manual routing in the system of the present invention.
FIG. 13 is a diagram illustrating a first screen example in the system of the present invention.
FIG. 14 is a diagram illustrating a second screen example in the system of the present invention.
FIG. 15 is a diagram illustrating a block pattern.

### DETAILED DESCRIPTION

Hereinafter, embodiments of the present disclosure will be described with reference to the drawings. In the following description, identical parts are denoted by the same reference numeral. Their names and functions are also the same. Therefore, their detailed descriptions will not be repeated.

### < 1. Overview>

An overview of a piping and cable routing system for plant design for implementing the present disclosure will be described below. This piping and cable routing system is a system for designing cables for power supply and cables for various communications for a group of facilities to produce chemical products through various production processes by chemical reactions as in a liquefied natural gas (LNG) plant and a petrochemical plant.

Taking an LNG plant as an example, the facilities arranged in the plant include an acid gas removal facility for removing an acid gas (H₂S, CO₂, organic sulfur, etc.) contained in a raw material gas to be liquefied, a sulfur recovery facility for recovering elemental sulfur from the removed acid gas, a moisture removal facility for removing moisture contained in the raw material gas, a compression facility for a refrigerant (mixed refrigerant, propane refrigerant, etc.) used for cooling or liquefying the raw material gas, and the like. Here, the facility of a plant refers to a group of apparatuses or instruments installed according to the purpose of the plant.

The design of such a plant includes, for example, the following processes. First, the arrangement of facilities in the plant, various instruments such as pumps and heat exchangers, a frame (piping rack) for passing through various pipes, and the route of the main piping are determined, and the layout of the plant is designed to create an arrangement plan called a plot plan. Next, based on the functional requirements of the entire plant, a detailed process unit (a series of manufacturing processes) from the receipt of raw materials used in the plant to the shipment of products is formulated, material/heat balance is calculated for each process, and a process flow called a process flow diagram (PFD) is created. Furthermore, based on the PFD, a simulation is repeated to correct the process calculation, the layout of the piping and various cables that pass through the instruments in the plant is determined (piping routing), and a piping and instrument diagram (P 8v ID) is created. A piping routing system 1 (hereinafter, simply referred to as a system 1) according to the present disclosure is a 3D CAD system for supporting process flow creation, piping routing, P 8v ID creation, and the like by designing the layout of instruments, cables, and the like in the entire plant and each facility in each of such processes.

In the present disclosure, among the piping and cable routing systems for plant design as described above, a system for performing routing, arrangement, and the like of process piping, accompanying instruments or the like, which designates any coordinate position in a virtual space for routing piping and uses the designated coordinates for various subsequent processes, will be particularly described.

### <First Embodiment>

Hereinafter, the system 1 will be described. In the following description, for example, when a terminal apparatus 10 accesses a server 20, the server 20 responds with information for generating a screen in the terminal apparatus 10. The terminal apparatus 10 generates and displays a screen based on the information received from the server 20.

### <2. Overall Configuration of System 1>

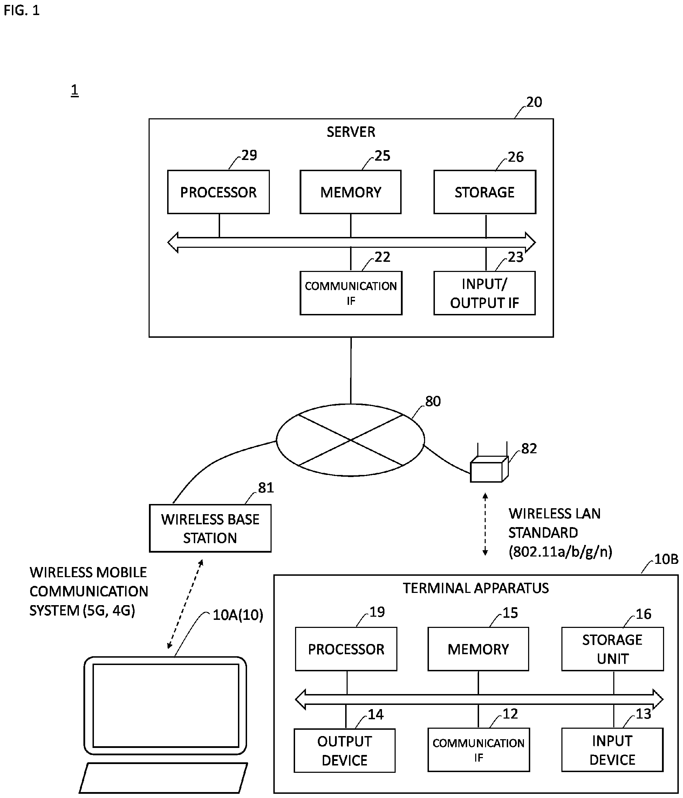

FIG. 1 is a diagram showing an overall configuration of the system 1. As shown in FIG. 1, the system 1 includes a plurality of terminal apparatuses (a terminal apparatus 10A and a terminal apparatus 10B are shown in FIG. 1; hereinafter collectively referred to as a "terminal apparatus 10") and a server 20. The terminal apparatus 10 and the server 20 are communicatively connected to each other via a network 80. The network 80 is constituted by a wired or wireless network.

The terminal apparatus 10 is an apparatus operated by each user. Here, the user refers to a person who designs a plant using the terminal apparatus 10. The terminal apparatus 10 is implemented by a stationary personal computer (PC) or a laptop PC. Alternatively, the terminal apparatus 10 may be, for example, a tablet terminal compatible with a mobile communication system or a mobile terminal such as a smartphone.

The terminal apparatus 10 is communicatively connected to the server 20 via the network 80. As shown in FIG. 1 as the terminal apparatus 10B, the terminal apparatus 10 includes a communication interface (IF) 12, an input device 13, an output device 14, a memory 15, a storage unit 16, and a processor 19.

The communication IF 12 is an interface for inputting and outputting signals to enable the terminal apparatus 10 to communicate with an external apparatus.

The input device 13 is an input device (such as a keyboard, a touch panel, a touch pad, or a pointing device such as a mouse) for receiving an input operation from the user.

The output device 14 is an output device (such as a display or a speaker) for presenting information to the user.

The memory 15 is used to temporarily store a program, data to be processed by the program, etc., and the like, and is a volatile memory such as a dynamic random access memory (DRAM).

The storage unit 16 is a storage device for storing data, and is, for example, a flash memory or a hard disc drive (HDD).

The processor 19 is hardware for executing an instruction set described in a program, and is composed of an arithmetic unit, a register, a peripheral circuit, and the like.

The server 20 is a device that manages information on each user, information on various instruments and various cables, and information on a designed virtual space (including a virtual space being designed).

The server 20 receives, from the user, an input of, for example, types of instruments to be arranged in a virtual space for plant design, their arrangement positions, and an instruction to route pipes and cables.

Specifically, for example, a viewpoint (virtual camera) in a virtual space for plant design is set, various instruments arranged and pipes and cables routed according to a user's instruction are rendered based on the setting of the virtual camera, and displayed on the terminal apparatus 10.

The server 20 arranges various instruments in a virtual space based on the input types and arrangement positions of the various instruments, determines a route of the pipes and cables based on the instruction from the user, routes the pipes and cables in the virtual space, and causes the user's terminal to display the routing result.

The server 20 is a computer connected to the network 80. The server 20 includes a communication IF 22, an input/output IF 23, a memory 25, a storage 26, and a processor 29.

### <3. Configuration of Terminal Apparatus 10>

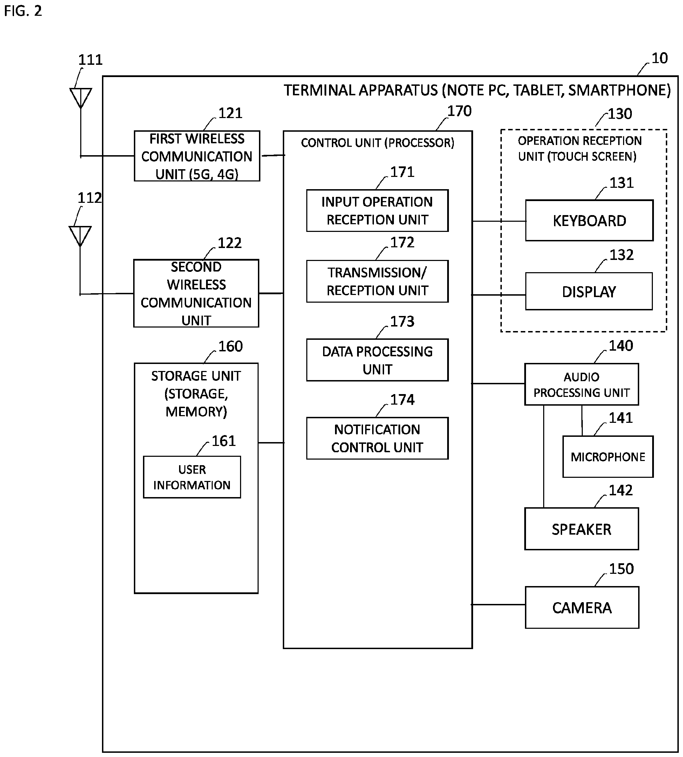

FIG. 2 is a block diagram showing a functional configuration of the terminal apparatus 10 constituting the system 1. As shown in FIG. 2, the terminal apparatus 10 includes a plurality of antennas (an antenna 111 and an antenna 112), wireless communication units (a first wireless communication unit 121 and a second wireless communication unit 122) corresponding to the respective antennas, an operation reception unit 130 (including a keyboard 131 and a display 132), an audio processing unit 140, a microphone 141, a speaker 142, a camera 150, a storage unit 160, and a control unit 170.

The first wireless communication unit 121 provides a received signal to the control unit 170.

The operation reception unit 130 has a mechanism for receiving a user's input operation, and specifically includes the keyboard 131 and the display 132.

The storage unit 160 is composed of, for example, a flash memory or the like, and stores data and programs used by the terminal apparatus 10. The storage unit 160 stores user information 161.

The user information 161 is information on a user who uses the terminal apparatus 10 to perform plant design which is a function of the system 1. The user information includes information for identifying the user (user ID), a user name, information on an organization, such as a company, to which the user belongs, and the like.

The control unit 170 controls the operation of the terminal apparatus 10 by reading a program stored in the storage unit 160 and executing instructions included in the program. The control unit 170 is, for example, an application program installed in the terminal apparatus 10 in advance. The control unit 170 operates in accordance with the program to perform the functions as the input operation reception unit 171, a transmission/reception unit 172, a data processing unit 173, and a notification control unit 174.

The input operation reception unit 171 performs processing for receiving a user's input operation on an input device such as the keyboard 131.

The transmission/reception unit 172 performs processing for the terminal apparatus 10 to transmit and receive data to and from an external apparatus such as the server 20 in accordance with a communication protocol.

The data processing unit 173 performs processing for performing an arithmetic operation on data received by the terminal apparatus 10 in accordance with a program, and outputting an operation result to a memory or the like.

The notification control unit 174 performs processing for presenting information to the user. The notification control unit 174 performs processing for causing the display 132 to display a display image, processing for causing the speaker 142 to output audio, and processing for generating vibration on the camera 150.

### <4. Functional Configuration of Server 20>

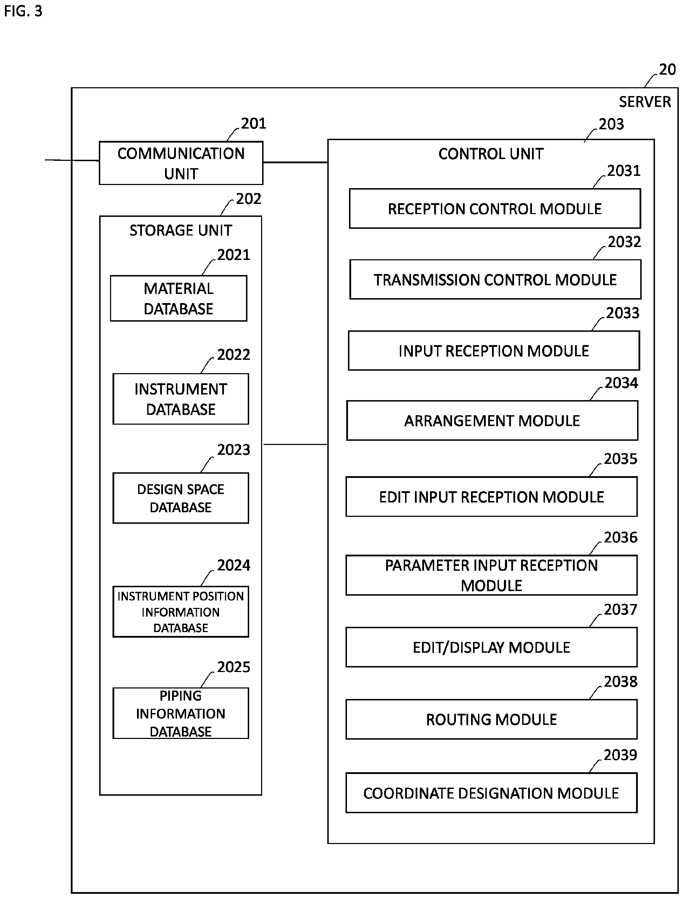

FIG. 3 is a diagram showing a functional configuration of the server 20 constituting the system 1. As shown in FIG. 3, the server 20 performs functions as a communication unit 201, a storage unit 202, and a control unit 203.

The communication unit 201 performs processing for the server 20 to communicate with an external apparatus.

The storage unit 202 stores data and programs used by the server 20. The storage unit 202 stores a material database 2021, an instrument database 2022, a design space database 2023, an instrument position information database 2024, a piping line information database 2025, and the like.

The material database 2021 is a database for holding information on various materials arranged in a virtual space for plant design in the system 1. Various materials include pipes, fittings, flanges, valves, etc., which constitute the plant. Details of the database will be described later.

The instrument database 2022 is a database for holding information on various instruments arranged in a virtual space for plant design in the system 1. Details will be described later.

The design space database 2023 is a database for holding information on a virtual space designed by the user. Details will be described later.

The instrument position information database 2024 is a database for holding information on the positions of various instruments arranged in a three-dimensional space, including the start point and the end point of each instrument. Details will be described later.

The piping line information database 2025 is a database for holding information on a piping line connecting instruments in a virtual space. The piping line refers to a piping route formed by routing instruments with a group of materials. Details of the database will be described later.

When the processor of the server 20 performs processing in accordance with programs, the control unit 203 functions as various modules such as a reception control module 2031, a transmission control module 2032, an input reception module 2033, an arrangement module 2034, an edit input reception module 2035, a parameter input reception module 2036, an edit/display module 2037, a routing module 2038, and a coordinate designation module 2039.

The reception control module 2031 controls processing for the server 20 to receive a signal from an external apparatus in accordance with a communication protocol.

The transmission control module 2032 controls processing for the server 20 to transmit a signal to an external apparatus in accordance with a communication protocol.

The input reception module 2033 controls processing for receiving, from the user, an operation to designate positions where various pipes, cables, instruments, etc. are to be arranged in a virtual space for plant design using the system 1, an operation to designate types of these instruments, etc., and the like.

When the user performs plant design using the terminal apparatus 10, the terminal apparatus 10 causes the display 132 to display a virtual space modeled on an actual site for which plant design is to be performed. Thereafter, the user performs a predetermined operation on a screen of the display 132 to input types of various pipes, cables, instruments, etc. to be arranged in the virtual space, and their arrangement positions in the virtual space. The input reception module 2033 receives the input information on the types of various pipes, cables, instruments, etc., and their arrangement positions in the virtual space. The input reception module 2033 also receives an input of designated coordinates for the piping line. Details of the designated coordinates will be described later.

In the input reception module 2033, receiving a predetermined operation on a screen of the display 132 includes, for example, displaying a list of various pipes, cables, instruments, etc. in a plurality of patterns. The input reception module 2033 receives an operation to select a desired type, by clicking or the like, from the list of various pipes, cables, instruments, etc. in a plurality of patterns displayed on the screen. The input reception module 2033 receives an operation to select an arrangement position (i.e., receives an operation to designate a position in the virtual space where an object corresponding to the instrument or the like is arranged) by receiving a designation of a desired position in the virtual space displayed on the screen by clicking or the like. As another example of the predetermined operation, there is an operation to select an arrangement position by selecting a desired image from a list of images showing the appearances of various pipes, cables, instruments, etc. displayed on the screen, dragging the image, and moving the image to a desired position in the virtual space displayed on the screen. Note that the input operation for arranging various pipes, cables, instruments, and the like is not limited to these.

The arrangement module 2034 controls the processing for arranging displaying various pipes, cables, instruments, etc. in the virtual space, based on the information on the types of various pipes, cables, instruments, etc., and their arrangement positions in the virtual space received by the input reception module 2033. The terminal apparatus 10 receives information on the types of various pipes, cables, instruments, etc. to be arranged in the virtual space and their arrangement positions in the virtual space by receiving a predetermined operation to the terminal apparatus 10 from the user. Based on the information, the arrangement module 2034 arranges the various pipes, cables, instruments, etc. at the arrangement positions input by the user in the virtual space displayed on the display 132 of the terminal apparatus 10, and causes the display 132 of the terminal apparatus 10 to display them.

The edit input reception module 2035 controls processing for receiving an input operation to edit various pipes, cables, instruments, etc. from the user. The terminal apparatus 10 receives from the user an operation to input edit information for making various adjustments to various pipes, cables, instruments, etc. displayed on the display 132 of the terminal apparatus 10. The edit input reception module 2035 receives the input edit information of various pipes, cables, instruments, etc. The edit input reception module 2035 receives, as an operation to edit various pipes, cables, instruments, etc., an operation to edit one or more of the types, shapes, sizes, quantities, and positions of pipes, cables, instruments, etc.

The edit input reception module 2035 receives, as an input operation to edit various pipes, cables, instruments, etc. by the user, for example, an input operation to edit parameters set for various instruments. As another example of the input operation by the user, the edit input reception module 2035 receives an input operation to edit the size, length, or the like by dragging one of various instruments displayed on the display 132 to receive a numerical value corresponding to the size or length as an input value to the parameter of the instrument.

The parameter input reception module 2036 controls processing for receiving an input of various parameters when routing various pipes, cables, instruments, etc. The various parameters include information on the types of pipes, cables, instruments, etc., the types of instruments to be connected, the number, quantity, and arrangement of objects for arranging these, the operating conditions of a piping line to be routed, and the like. Details of various parameters will be described later. The user operates the terminal apparatus 10 to input various parameters when routing pipes, cables, instruments, etc.

The edit/display module 2037 controls processing for changing the display mode of the various pipes, cables, instruments, etc. and displaying them in the virtual space, based on the edit information of the various pipes, cables, instruments, etc. received by the edit input reception module 2035.

The edit/display module 2037 changes the display mode of the various pipes, cables, instruments, etc. in the virtual space displayed on the display 132 of the terminal apparatus 10 based on the various kinds of information received by the edit/input reception module 2035.

The edit/display module 2037 changes the appearances of objects in the virtual space in accordance with, for example, the length of a pipe or the connection angle with an instrument received from the user, and displays the objects on the display 132 of the terminal apparatus 10.

The routing module 2038 controls processing for connecting instruments to each other (routing processing) by means of pipes and cables to be arranged in a plant to be designed using the system 1. The routing module 2038 receives from the user an instruction operation performed in association with various pipes, cables, instruments, etc. arranged in the virtual space, and performs routing based on the instruction operation. The piping arranged in the plant includes, for example, piping for transporting a raw material gas in the plant, piping for transporting an absorbent for absorbing a removed component from the raw material gas, piping for taking out a product produced in the plant, piping for transporting an exhaust gas generated as a result of the production of the product, and the like. These pipes are arranged for the flow of liquid or gaseous fluids.

The cables arranged in the plant include a power cable for supplying power to various instruments and a communication cable used for communication between various instruments.

The input reception module 2033 receives, from the user, an operation to designate a start position and an end position of routing and an operation to start routing. The user designates, for example, on a screen displayed on the display 132 of the terminal apparatus 10, a predetermined position, such as various pipes, cables, instruments, etc. arranged in the virtual space, as a start position or an end position of routing.

The predetermined position may be, for example, an end point of an attached pipe of an instrument. The attached pipe of a instrument is a pipe provided in advance in an object representing the instrument, and refers to a structure serving as a reference (a start point or an end point) of routing.

The input reception module 2033 receives from the user an operation to provide an instruction for routing (for example, pressing of a predetermined button on the screen). The routing module 2038 performs auto-routing (automatic routing) of cables in response to reception of a routing instruction from the user.

When performing auto-routing, the routing module 2038 determines the direction of routing of pipes and cables according to predetermined conditions, and performs auto-routing using an algorithm for avoiding existing various pipes, cables, instruments, etc. Further, the routing module 2038 may be configured to perform routing using pipes that conform to a pipe diameter, a material, and the like designated by parameters input by the user or parameters set in advance and recommend pipes of a pipe diameter and a material optimum for a fluid to be passed therethrough.

Note that the routing module 2038 may perform routing of pipes, cables, instruments, etc. by a manual operation of the user based on detailed input information input by the user in the virtual space (manual routing).

As described above, the routing module 2038 performs routing of a piping line while switching, by a user's operation, between auto-routing by an arithmetic operation using various input parameters and manual routing by a user's manual operation.

The coordinate designation module 2039 assigns functional roles to the designated coordinates input by the user. The following two functional roles are assigned to the designated coordinates by the coordinate designation module 2039.
- A role as a boundary in line break processing
- A role as a path point in auto-routing processing

These roles will be described in detail below.

First, the line break processing will be described.

The line break processing refers to a function of treating one piping line as two separate piping lines for the purpose of management of attribute information in order to assign different attribute information to a single piping line using a certain reference as a boundary. The attribute information is information for identifying the attribute of each material constituting the piping. The attributes of materials include design values (design pressure, design temperature).

In plant design, when a pressure reducing valve, an instrument, or a T-tube intervenes on the piping line, the specifications (ratings) of the materials required before and after the intervention may differ. The specifications of materials are set based on the design pressure, design temperature, etc. according to the operating conditions. Such specifications of materials are specified in the P & ID, and the materials employed in piping lines are defined as service classes.

The service class is an index that classifies materials constituting piping in the plant by design pressure/temperature, used fluid, or the like. In other words, the service class is attribute information of a piping line and a material, and indicates a design value selected from at least one of groups of pressures, temperatures, fluids, etc. for designing the plant, or a design group in which the design value and at least one material of a material group consisting of pipes, fittings, flanges, and valves constituting the plant are defined as a specific group.

In the system 1, materials are classified into service classes according to their design specifications, and the types, material qualities, wall thicknesses, etc., of piping materials (pipes, flanges, valves, fittings, and the like) to be used are specified for each service class. By classifying materials by service class, specifications of piping parts to be used can be determined for each line. Further, classifying materials by service class saves labor of describing them in drawings.

Specifically, the service class is set for each material (pipe, flange, valve, elbow, fitting) constituting the piping line.

A material, thickness, pressure resistance, heat resistance, and the like are set for each service class.

In the P & ID, an appropriate service class is designated as a material constituting a piping line in correspondence with identification information (piping line number) that identifies the piping line. In addition, a boundary of service class also occurs at the boundaries of heat insulation/cold insulation, design temperature, and design pressure. The service class may be changed in the middle of the piping line connecting instruments.

For example, in conventional manual routing systems, since the arrangements of objects are stacked on the virtual space, when a piping line is constructed to a point included in one service class, a service class is assigned to the relevant point.

On the other hand, in the system 1, since the piping line connecting instruments is automatically routed by automatic routing processing, it is necessary to divide the piping line in accordance with the P 8v ID and then assign relevant service classes.

The 3D model to which the service classes are assigned is then output as an isometric drawing, and output as a construction drawing for each service class (each piping line number) since the inspection method differs depending on the material and the like.

Therefore, the system 1 is provided with a function of assigning attribute information based on designated coordinates designated by the user as a boundary for performing the line break processing.

The coordinate designation module 2039 assigns a plurality of pieces of identification information to the piping line using the designated coordinates as a boundary.

Next, a path point (via point) used in the auto-routing processing will be described.

The path point refers to coordinates defined as a via point in the auto-routing processing.

In the auto-routing processing, routing is automatically performed so as to connect the set start point and end point with the shortest route. On the other hand, in some cases, it is necessary to set a routing route via a predetermined location due to restrictions on structures arranged around the instruments or due to routing requirements for the piping line.

Therefore, the system 1 is provided with a function of defining the designated coordinates designated by the user as a via point (path point) and routing the shortest route connecting the start point and the end point via the path point. The path point can be set at any position in the virtual space. For example, the path point may be set on a specific instrument or piping line, or may be set at any coordinates which are not on the piping line. The path point holds information on a coordinate position, size, and orientation. The size is information on the diameter of the piping passing through, and the orientation is information on the "entrance" connected from the start point and the "exit" connected toward the end point.

As described above, the system 1 is provided with a function for the user to input designated coordinates as auto-routing processing using a path point.

In the present embodiment, as described above, the server 20 receives an input of types and arrangement positions of various pipes, cables, instruments, etc., receives an operation to edit the pipes, cables, instruments, etc., and performs routing based on a routing instruction, but the configuration is not limited to this.

For example, some or all of the functions described above may be performed in the terminal apparatus 10 by receiving an input at the terminal apparatus 10 for processing in the terminal apparatus 10, and the result may be displayed on the display 132 of the terminal apparatus 10. In order to achieve such a configuration, the user may access the server 20 via the terminal apparatus 10 to install a program provided by the server 20 into the terminal apparatus 10 and perform processing in the terminal apparatus 10. In this case, the server 20 may lack the functions of some or all of the input reception module 2033, the arrangement module 2034, the edit input reception module 2035, the parameter input reception module 2036, the edit/display module 2037, and the routing module 2038.

### <5. Data Structure>

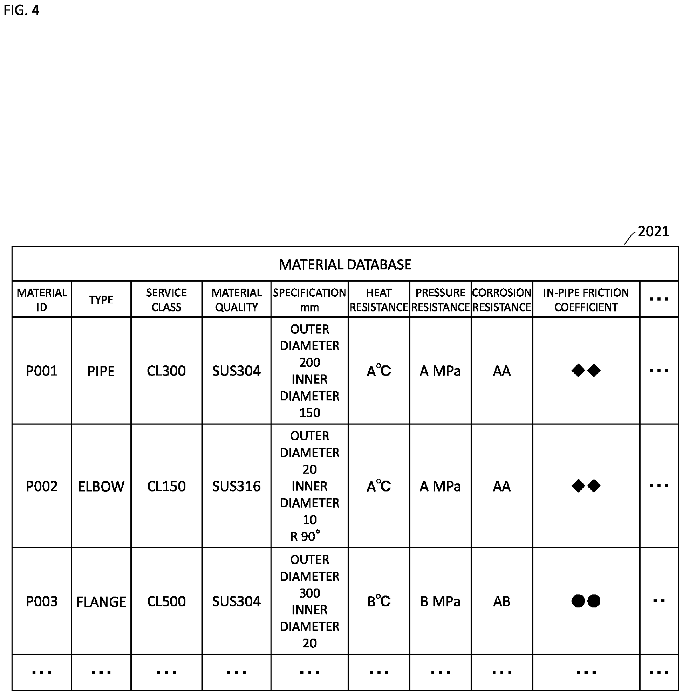

FIG. 4 is a diagram showing an example data structure of the material database 2021 stored in the server 20. The material database 2021 stores information on candidates for materials to be used as piping.

As shown in FIG. 4, each record of the material database 2021 includes an item "material ID", an item "type", an item "service class", an item "material", an item "specification mm", an item "heat resistance", an item "pressure resistance", an item "corrosion resistance", an item "in-pipe friction coefficient", and the like.

The item "material ID" is information for identifying the type of each of various pipes that can be arranged in the virtual space in the system 1.

The item "type" is information for distinguishing the type of the material corresponding to the material ID. Examples of the type include a pipe (straight pipe), an elbow, and a flange.

The item "service class" is information for distinguishing the service class group which the material corresponds to.

The item "material quality" is information indicating the material quality of the material corresponding to the material ID. Examples of the material quality of the material include SUS304 and SUS316.

The item "specification" is information on the dimensions of the material corresponding to the material ID. For example, in the case of pipes, the item includes information on the outer diameter and the inner diameter. In the case of elbows, the item "specification" further includes a bend angle. The item "specification" may include information on other dimensions.

The item "heat resistance" is information on the heat resistance of the material corresponding to the material ID.

The item "pressure resistance" is information on the pressure resistance of the material corresponding to the material ID. The pressure resistance refers to the range of pressure of the fluid flowing down the inside which can be tolerated by the strength of the material.

The item "corrosion resistance" is information indicating the corrosion resistance of each of various pipes. For example, the corrosion resistance of the pipe with the pipe ID "P001" is "AA".

The item "in-pipe friction coefficient" is information indicating the in-pipe friction coefficient of each of various pipes. For example, the in-pipe friction coefficient of the pipe with the pipe ID "P001" is "◆◆".

When routing pipes, the server 20 refers to physical properties of the material to be passed through the pipes and information on the pipes held in the material database 2021, thereby performing routing using the optimum pipes. For example, when having a substance with a high viscosity flow, a pipe having a small friction coefficient may be designated, and when having an acid substance flow, a pipe having corrosion resistance to the substance may be designated for routing.

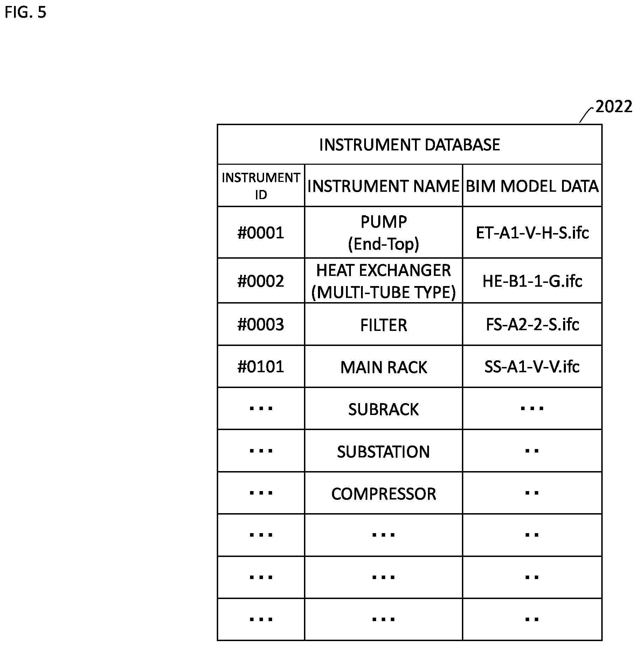

FIG. 5 is a diagram showing an example data structure of the instrument database 2022 stored in the server 20. The instrument database 2022 stores information on candidates for instruments to be arranged in the virtual space.

As shown in FIG. 5, each record of the instrument information database 2022 includes an item "instrument ID", an item "instrument name", an item "BIM model data", and the like.

The item "instrument ID" is information for identifying the type of each of various instruments that can be arranged in the virtual space in the system 1.

The item "instrument name" is a name indicating the type of each of various instruments, and for example, information on a name indicating a type such as a pump, a heat exchanger, a filter, a valve, and a rack is stored. In the case of a pump or a heat exchanger, information indicating the type of the pump such as an end-top type or the type of the heat exchanger such as a multi-tube type is also stored. Note that the name indicating the instrument may be a symbol designated by a predetermined standard or the like, or a model number or th like designated by the manufacturer.

The item "BIM model data" is information indicating the data name (file name) of model data arranged in the virtual space in the system 1, and is model data used in the 3D CAD system. The 3D CAD system provided by the server 20 constructs a three-dimensional virtual space, and performs modeling to represent the shapes of instruments in the three-dimensional virtual space. In addition, the 3D CAD system sets a viewpoint (virtual camera) in the virtual space, and performs rendering for these instruments based on the setting of the virtual camera. The model data stored in the item "BIM model data" is model data for rendering an actual instrument from the viewpoint of the predetermined virtual camera.

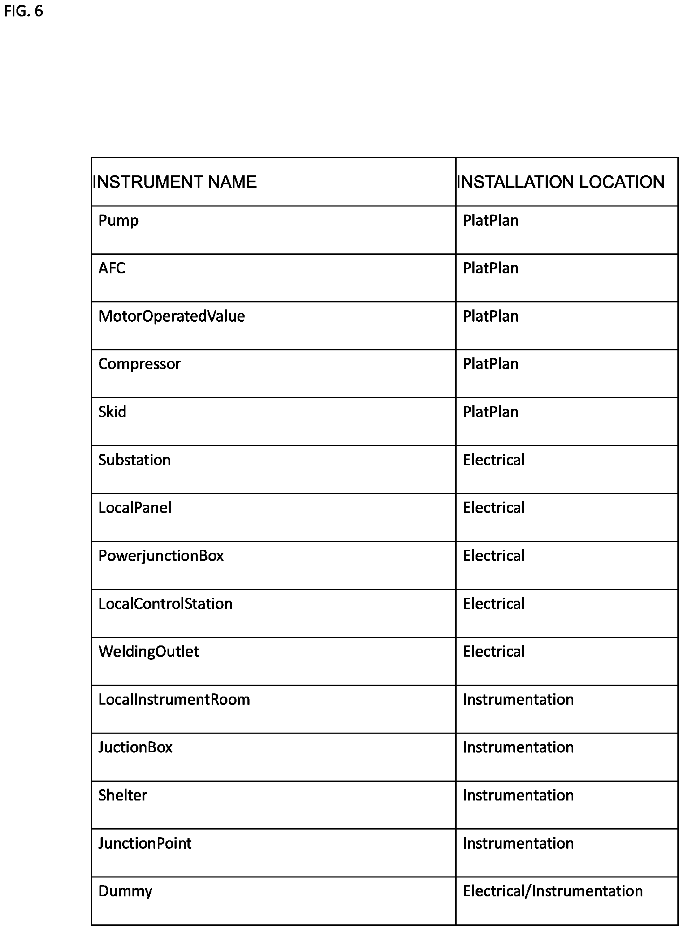

Here, the types of instruments handled by the system 1 will be described with reference to FIG. 6.

As shown in FIG. 6, various instruments such as a pump, a compressor, a tower, and a junction box are used in the system 1. These are each arranged in a predetermined installation section in the virtual space depending on the type of the instrument.

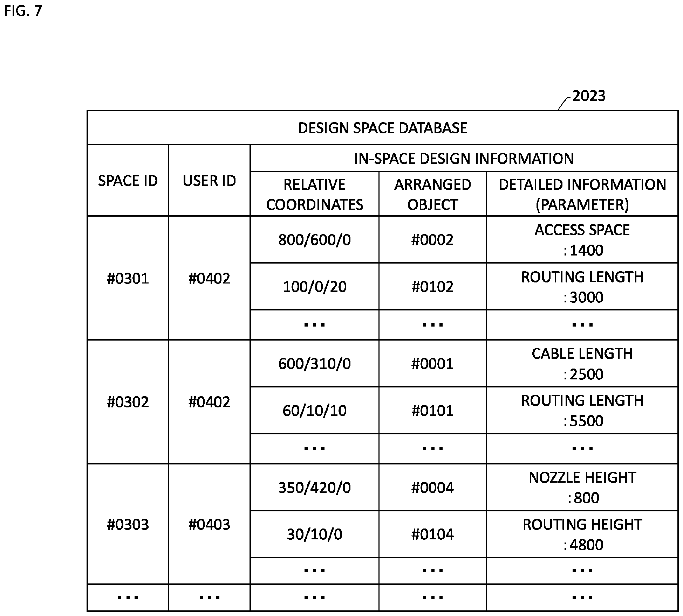

FIG. 7 is a diagram showing an example data structure of the design space database 2023 stored in the server 20. The design space database 2023 includes information on the arrangement of various instruments, pipes, etc. arranged in the virtual space in which a plant system is designed.

As shown in FIG. 7, each record of the design space database 2023 includes an item "space ID", an item "user ID", an item "in-space design information", and the like.

The item "space ID" is information for identifying each piece of information of the virtual space designed by the user in the system 1.

The item "user ID" is information for identifying each user who uses the system 1. Note that information for identifying a plurality of users may be stored as the item "user ID". This is to enable a plurality of users to design and share one virtual space, and the information of the item "in-space design information" to be described later may be stored in association with each user.

The item "in-space design information" is information on each of various instruments arranged and a piping line routed in the virtual space by the user in the system 1, and specifically includes an item "relative coordinates", an item "arranged object", an item "detailed information (parameter)", and the like.

The item "relative coordinates" is information indicating the relative position in the virtual space of an instrument or pipe arranged in the virtual space, and for example, three-dimensional coordinate data in the virtual space is stored. The relative coordinates are, for example, relative coordinates of a reference position of the instrument (for example, a center position or an end point in any of six directions) when the virtual space is expressed by XYZ coordinates, but are not limited to the ones in this system.

The item "arranged object" is information indicating an instrument or pipe arranged in the virtual space, and corresponds to the item "instrument ID" of the instrument database 2022.

The item "detailed information (parameter)" is edit information when an instrument or pipe arranged in the virtual space is edited, and information on routed piping, and for example, an edit parameter of an instrument is stored. The edit parameter of an instrument is information on quantity and size.

The input reception module 2033 of the server 20 adds a record to the design space database 2023 to update it as arrangement information of an instrument is received from each user. The edit input reception module 2035 adds a record to the design space database 2023 to update it as edit parameter information of an instrument is received from each user. The routing module 2038 adds a record to the design space database 2023 to update it as piping routing processing is performed.

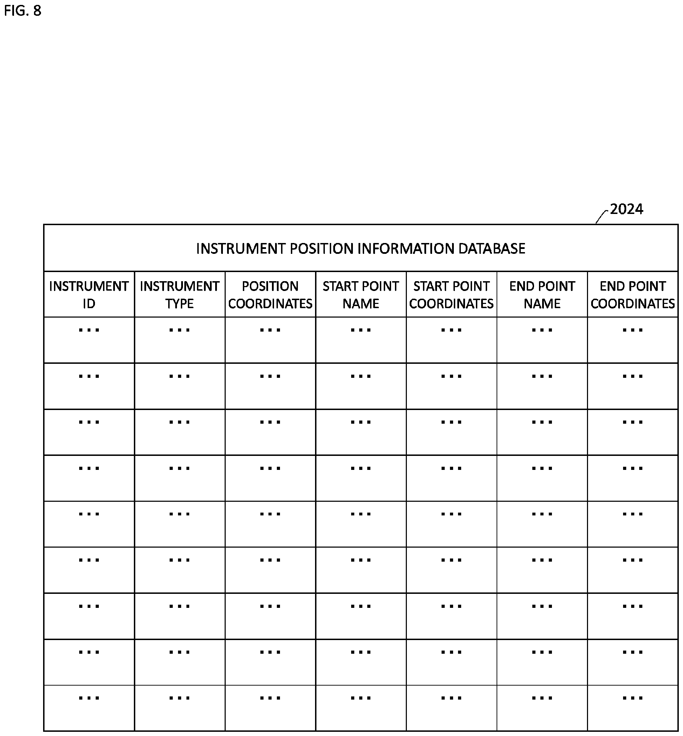

FIG. 8 is a diagram showing an example data structure of the instrument position information database 2024 stored in the server 20. The instrument position information database 2024 includes information on the position associated with each of various instruments arranged in the virtual space.

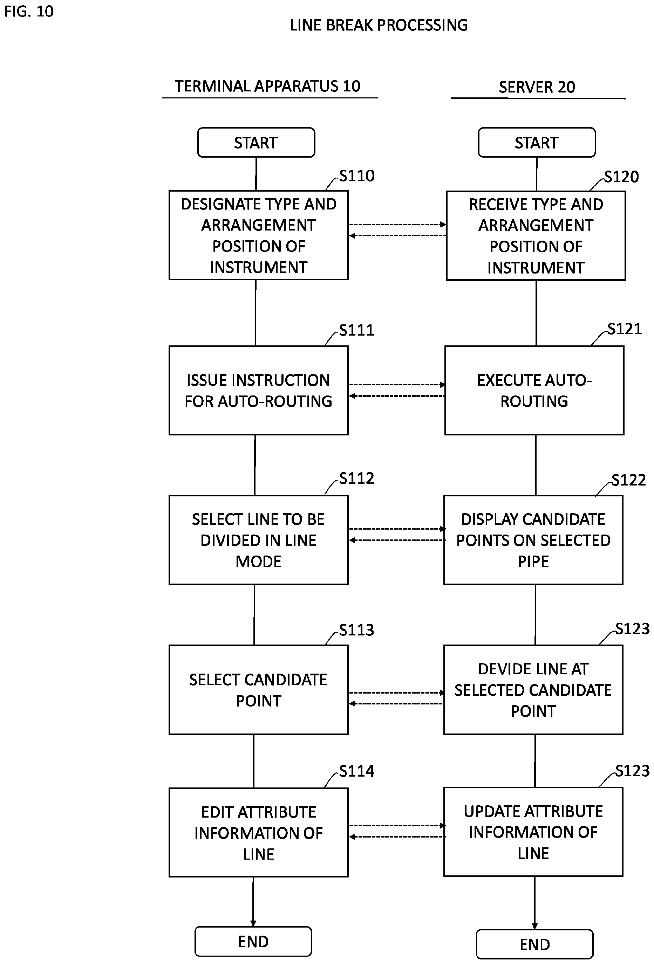

FIG. 8 is a diagram showing an example data structure of the instrument position information database 2024. As shown in FIG. 10, the instrument position information DB includes an item "instrument ID", an item "instrument type", an item "position coordinates", an item "start point name", an item "start point coordinates", an item "end point name", and an item "end point coordinates".

The item "instrument ID" is information for identifying an instrument arranged in the three-dimensional space.

The item "instrument type" is information indicating the type of the instrument corresponding to the instrument ID.

The item "position coordinates" is information indicating the position coordinates of the instrument corresponding to the instrument ID in the three-dimensional space.

The item "start point name" is information indicating the name of the start point in the instrument corresponding to the instrument ID. The name of the start point includes an identification number for identifying the start point. The start point may be, for example, an attached pipe provided in advance in the instrument.

The item "start point coordinates" is information indicating the position coordinates in the three-dimensional space of the start point in the instrument corresponding to the instrument ID.

The item "end point name" is information indicating the name of the end point in the instrument corresponding to the instrument ID. The name of the end point includes an identification number for identifying the end point.

The item "end point coordinates" is information indicating the position coordinates in the three-dimensional space of the end point in the instrument corresponding to the instrument ID. The end point may be, for example, an attached pipe provided in advance in the instrument.

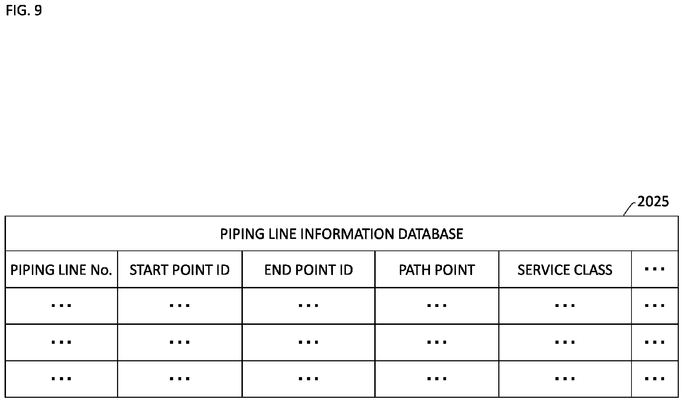

As shown in FIG. 9, each record of the piping line information database 2025 includes an item "piping line No.", an item "start point ID", an item "end point ID", an item "path point", an item "service class", and the like.

The item "piping line No." is information for identifying the route of piping that has already been routed.

The item "start point ID" is information for identifying the start point of the piping route.

The item "end point ID" is information for identifying the end point of the piping route.

The item "path point" is information indicating the coordinates of a path point set for the routing. This field is blank when no path point is used.

The item "service class" is information for distinguishing a service class group required for the piping line. The item "service class" may be stored in a form included in a character string of the piping line number.

### <6. Operation in Line Break Processing>

FIG. 10 illustrates line break processing by the system 1 in the present embodiment. This processing is processing for dividing a routed piping line and assigning different identification information.

As shown in FIG. 10, in step S110, the control unit 170 of the terminal apparatus 10 inputs the types and arrangement positions of a plurality of instruments constituting a plant in the space for designing the plant, which are designated by the user.

After step S110, the server 20 receives the input of the types and arrangement positions of the instruments (step S120). As a result, objects representing the instruments arranged in the virtual space are arranged at the designated positions.

After step S120, the control unit 170 of the terminal apparatus 10 issues an instruction for auto-routing from the user (step S111). Specifically, the user designates the start point and the end point of the routing, and inputs operating conditions of the piping used for the routing. The operating conditions include the service class.

After step S120, the routing module 2038 of the server 20 executes auto-routing (S 121). Specifically, the routing module 2038 identifies the designated start point and end point and routes piping on the shortest path using materials that match the operating conditions of the piping. The new piping line routed by the routing module 2038 is stored as a new record in the piping line information database 2025. At this time, at least a piping line number created according to a predetermined rule, information on a start point and an end point, and information on a designated service class are stored as a new record.

After step S120, the user operates the terminal apparatus 10 to select a line mode. The line mode refers to a mode for editing the attributes of the routed piping line. Specifically, the line mode includes a piping line dividing operation to divide a piping line so that different attribute information can be assigned to each division, and a piping line integrating operation to integrate a plurality of materials into one piping line.

The user selects a piping line to be divided from piping lines (step S112). Note that the line mode may be selected after the piping line to be divided is selected.

The coordinate designation module 2039 of the server 20 receives a designation of a line mode and an indication as to a piping line to be divided, and displays a candidate part for a selected pipe (step S122). Specifically, the coordinate designation module 2039 sets a connection part between materials constituting the piping line as a candidate for the position of a boundary, and displays a plurality of candidate parts. For example, the coordinate designation module 2039 displays a connection part between a flange and an elbow, and a connection part between a straight pipe and a flange as candidate parts. That is, the coordinate designation module 2039 identifies a plurality of candidates for a boundary at which the piping line is divided in order for the user to input identification information different from that of the original piping line.

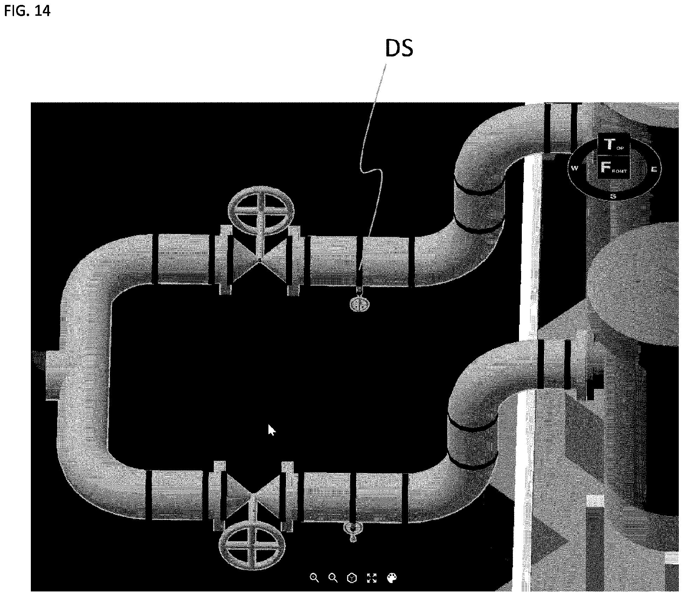

After step S122, the user selects a candidate part at which the piping line to be divided from the displayed candidate parts (step S113). That is, in the screen example shown in FIG. 14, a division plane for actual line division is selected from a plurality of candidate parts DS displayed. By the process of selecting the division plane, designated coordinates that serve as the reference for the line break are input.

After step S113, the coordinate designation module 2039 divides the piping at the selected candidate part (step S123). Specifically, the coordinate designation module 2039 assigns provisional and new piping line numbers based on the attribute information of the piping line while using the selected candidate part as the reference. The provisional and new piping line numbers are stored as new records in the piping line information database 2025. At this time, the other attribute information is taken over from the attribute information of the piping line before division.

In this case, a plurality of piping lines having different identification information may be displayed in different colors based on the piping line numbers, which are the identification information.

After step S123, the user inputs attribute information of the newly set piping lines (step S114). Specifically, the user inputs edit information including information on the service class and the piping line number among the attribute information of the piping line.

After step S114, the input reception module 2033 rewrites the attribute information of the newly set piping lines based on the input edit information. That is, the provisionally assigned piping line number is updated in the piping line information database 2025 based on the input from the user. In addition, the other attribute information input thereafter is also newly updated in the piping line information database 2025.

As a result, two piping lines having different attribute information are set for the routed piping line.

### <7. Operation of Routing Processing Using Path Point>

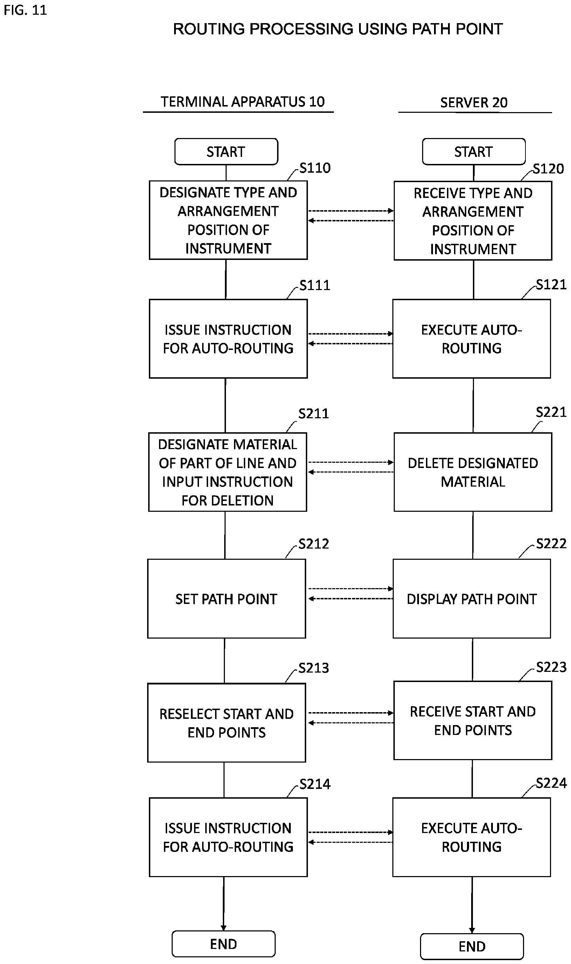

FIG. 11 describes the operation of the routing processing using a path point by the system 1 in the present embodiment. In this processing, a process for altering a part of the piping line that has been auto-routed once is performed using designated coordinates as a path point.

As shown in FIG. 11, the processing up to the process in which the routing module 2038 of the server 20 executes auto-routing (step S121) is the same as that in FIG. 10, and the description thereof will be omitted.

After step S121, the user operates the terminal apparatus 10 to input an instruction to designate and delete a material of a part of the piping line (step S211). Specifically, the user selects a material corresponding to a part of the routed piping line to be altered, and inputs an instruction for deletion.

After step S211, the routing module 2038 of the server 20 deletes the designated material (step S221). Specifically, the routing module 2038 deletes a designated material in the virtual space to place it in a hidden state.

After step S221, the user operates the terminal apparatus 10 to set a path point (step S212). Specifically, an icon corresponding to a path point is arranged at any position in the virtual space. By this arrangement of a path point, designated coordinates at which the path point is to be set are input. At this time, information on the path point is stored in the piping line information database 2025.

After step S212, the coordinate designation module 2039 of the server 20 displays the path point at the designated position in the virtual space (step S222).

After step S222, the user operates the terminal apparatus 10 to reset the start and end points (step S213). Specifically, the user selects an indicator corresponding to each of the start point and the end point, and clicks the position to be set as the start point, so that an indicator corresponding to the start point is displayed in the three-dimensional space.

The indicator corresponding to each of the start point and the end point includes information on the direction. The indicator includes information on the direction, which is indicated by a directional arrow. The information on the direction in the indicator is information for distinguishing between "entrance" and "exit". The direction of the arrow of the indicator can be changed by the user's operation.

For example, in step S211, an indicator is displayed on a cut that appears as a result of a material being deleted. When the arrow of the indicator points from the cut to the outside of the piping line (in the direction of no material), the indicator is recognized as a start point (exit). On the other hand, when the arrow of the indicator points from the cut to the inside of the piping line (in the direction of the material), the indicator is recognized as an end point (entrance).

The two indicators make up a pair, and are set so that changing the orientation of one automatically reverses the orientation of the other. By changing the orientation of this indicator, the start point and the end point can be set.

After step S213, the input reception module 2033 receives the positions of the start point and the end point (step S223). Specifically, the input reception module 2033 ascertains the positions of the start point and the end point from the position and orientation of the indicators set in step S213.

After step S223, the user operates the terminal apparatus 10 to input an instruction to perform auto-routing (step S214).

After step S214, the routing module 2038 of the server 20 executes auto-routing. Specifically, the routing module 2038 identifies the positions of the start point and the end point set by the indicators, and further identifies the position of the path point as a via point. Then, the routing module 2038 routes the shortest route from the start point to the end point via the path point as a route that the new piping line takes. Thus, routing processing using the path point can be performed.

### <8. Operation of Routing Processing Additionally Using Manual Routing>

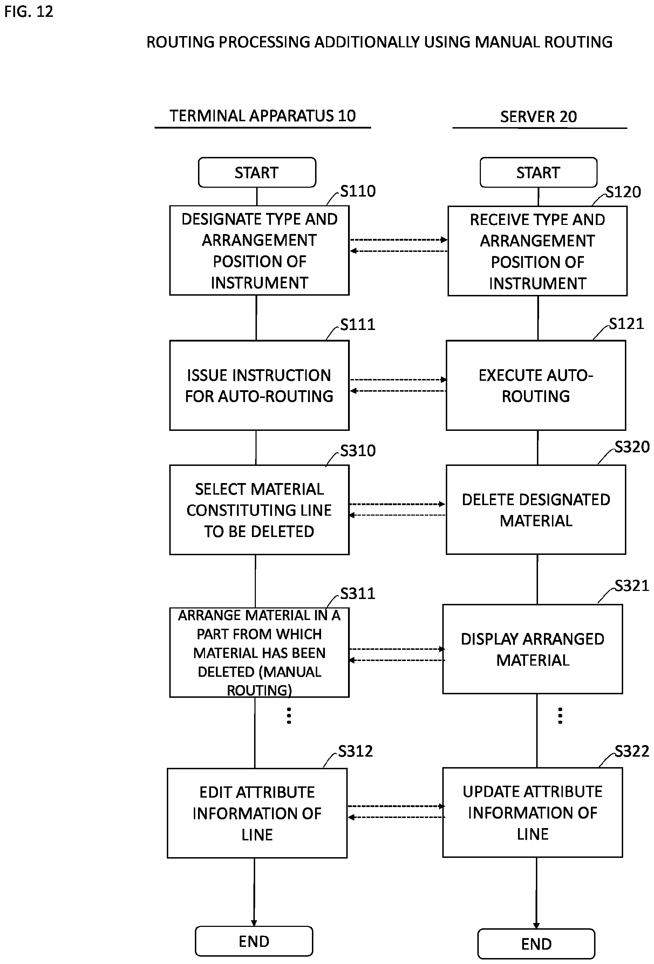

FIG. 12 illustrates an operation of routing processing additionally using manual routing by the system 1 according to the present embodiment. In this processing, a process for altering, by a manual operation, a part of the piping line that has been auto-routed once is performed.

As shown in FIG. 12, the processing up to the process in which the routing module 2038 of the server 20 executes auto-routing (step S121) is the same as that in FIG. 10, and the description thereof will be omitted.

After the auto-routing process (step S121) shown in FIG. 12, the user operates the terminal apparatus 10 to select a material constituting the piping line to be deleted (step S310). Specifically, the user designates a part to be altered in the piping line routed by the auto-routing, and inputs an instruction to delete the part.

After step S310, the routing module 2038 of the server 20 deletes the designated material (step S320). Specifically, the routing module 2038 performs a process of hiding the material designated by the user from the virtual space among the piping line already routed. This results in a part of the piping line missing.

After step S320, the user operates the terminal apparatus 10 to arrange a new material in the part of the piping line from which the material has been deleted (step S311: manual routing process). Specifically, the user first selects a position where a new material is to be arranged in the virtual space, and then selects a type of the new material to be arranged. At this time, the user can also select a detailed specification, for example, when the material is an elbow, specify the angle of the elbow.

After step S311, the routing module 2038 of the server arranges and displays the arranged material in the virtual space (step S321). Specifically, the routing module 2038 displays an object corresponding to the material selected and arranged by the user through a manual operation in a part of the piping line from which the material has been deleted.

The user repeats this manual operation a plurality of times to construct a desired piping line.

When the piping line desired by the user is constructed, the user inputs attribute information of the piping line (step S312). Specifically, the user selects a plurality of materials at the same time and inputs a line integration operation to make a single piping line. Thus, a piping line constructed with a plurality of materials is managed by a single piece of attribute information. Then, the user inputs relevant attribute information.

After step S312, the edit input reception module updates the attribute information of the piping line with the input attribute information (step S322). As a result, one piece of attribute information is set for a piping line composed of a plurality of materials constructed by a manual operation. This completes the routing processing additionally using manual routing.

Note that the above description shows an example of, after performing the auto-routing process (step S121), performing manual routing by altering the routed piping line by deleting a part thereof, but the embodiment is not limited to this. That is, the manual routing process may be performed first, followed by the auto-routing process.

In addition, the auto-routing process and the manual routing process may be repeatedly performed as many times as necessary.

### <9. Screen Examples>

Next, screen examples of the system 1 will be described.

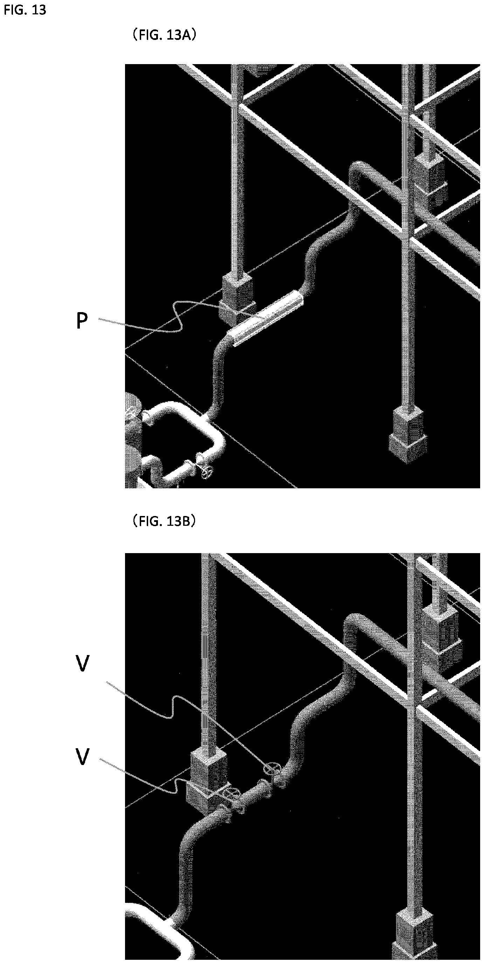

FIG. 13 shows a screen example when the line break processing is performed.

In the example shown, as shown in FIG. 13A and FIG. 13B, a valve is inserted into a designated piping line. This operation is performed after step S111 of the processing flow in FIG. 10. The system 1 has a function of inserting other materials into the piping line in this way.

In the screen example shown in FIG. 13A, a straight pipe P into which a valve as a new material is to be inserted. As a result, as shown in FIG. 13B, a new valve V is inserted into the straight pipe P. Any quantity of new material may be inserted. In the example shown, two additional valves V are inserted.

After this, in step S112, the piping line including the inserted material is selected as the line to be divided.

That is, the system 1 has a function of receiving an operation to add a new material that constitutes piping in the middle of a part of the piping constituted by one material, and setting a new candidate plane at the boundary surface of the added material.

FIG. 14 is a screen example displaying a candidate part for the line break processing.

As shown in FIG. 14, when a line is selected as the line to be divided in step S 112 of FIG. 10, the material connection part is highlighted as a boundary candidate part (DL) in the line. The candidate part is defined as a plane in the virtual space. In the example shown, all of the material connection parts are highlighted.

### <10. Modification>

A modification of the present embodiment will be described below.

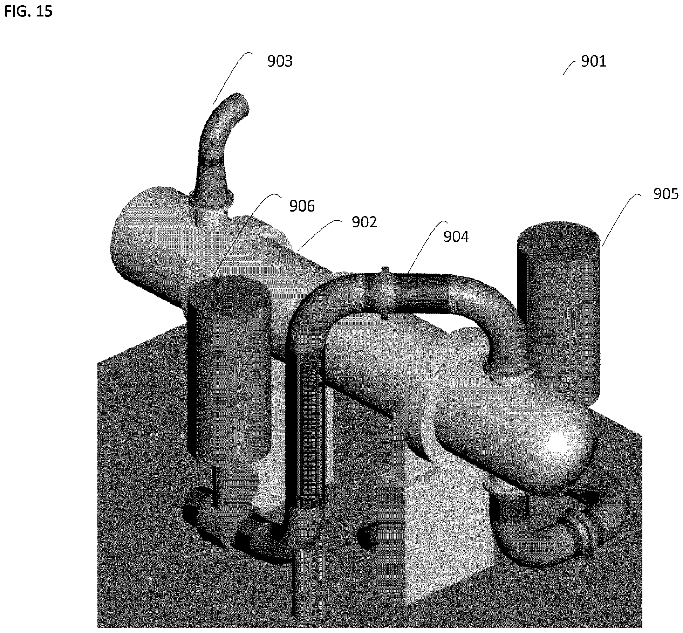

FIG. 15 is a diagram showing a block pattern 901. The block pattern is a material constituting an object in which piping is arranged in advance in an instrument constituting the plant. The block pattern 901 shown in the figure is composed of, as constituent materials, an instrument 902 (heat exchanger), a pipe 903, a pipe 904, a gauge 905, a gauge 906, and the like. The block pattern is not limited to the example shown in the figure, and may have any configuration.

The system 1 also receives an input of designated coordinates for block patterns. Therefore, the connection parts of the instrument 902 (heat exchanger), the pipe 903, the pipe 904, the gauge 905, and the gauge 906, which are materials constituting the block pattern 901, can be candidates for the boundary for the line break.

In the above embodiment, an example in which the line break processing and the routing processing using a path point are applied to piping routing has been described, but the present disclosure is not limited to this. For example, the line break processing and the routing process using a path point may be applied to cable tray routing.

### < 11. Summary>

As described above, in the auto-routing system according to the present embodiment, the input reception module 2033 of the server 20 receives an input of designated coordinates for a piping line.

Therefore, any coordinates can be designated in a virtual space for plant design.

Further, the step of assigning a plurality of pieces of identification information to a piping line is executed using input designated coordinates as a boundary. Therefore, it is possible to perform a line break based on the designated coordinates, divide the already routed piping into a plurality of groups, and assign different identification information to each group.

In addition, the step of receiving an input of a service class relating to the piping line from the user is executed for each identification information assigned. Therefore, service classes according to the P & ID can be assigned to the piping line divided by the line break.

Further, in the step of receiving an input of designated coordinates, the connection parts between materials are set as candidates for the position of the boundary. Therefore, it is possible to automatically detect a connection part of materials which serves as a reference for the line break.

In addition, in the step of receiving an input of designated coordinates, an input of designated coordinates is received for a material constituting a block pattern. Therefore, attribute information can be input also for a block pattern modeled in advance in accordance with the P & ID.

In addition, in the step of receiving an input of designated coordinates, when a plurality of piping lines having different identification information are displayed in different colors based on the identification information, the user can clearly tell the difference between identification numbers.

In addition, the system 1 routes piping so that the start point and the end point are connected via the path point defined by designated coordinates. Therefore, by using designated coordinates as a path point, it is possible to secure the degree of freedom of the auto-routing.

Although embodiments according to the present disclosure have been described above, these embodiments can be implemented in various other forms, and can be implemented with various omissions, replacements, and changes. These embodiments, variations, and those with omissions, replacements, and changes are included in the technical scope of the claims and their equivalents.

### < 12. Appendixes>

The matters described in the above embodiments will be appended below.

### (Appendix 1)

A program executed by a computer comprising a processor to automatically and manually route piping, wherein
the program causes the processor to execute:
a step of receiving an input of designated coordinates for a piping line routed so as to connect a plurality of instruments constituting a plant to each other in a virtual space for designing a plant; and
a step of assigning a plurality of pieces of identification information to the piping line using the input designated coordinates as a boundary.

### (Appendix 2)

The program according to (Appendix 1), wherein
the program further causes the processor to execute:
a step of receiving an input of an attribute relating to the piping line from the user for each of the pieces of identification information assigned.

### (Appendix 3)

The program according to (Appendix 2), wherein an input of a design value selected from at least one of groups of pressures, temperatures, fluids, etc. for designing the plant, or a design group in which the design value and at least one material of a material group consisting of a pipe, a fitting, a flange, and a valve constituting the plant are defined as a specific group is received as the attribute.

### (Appendix 4)

The program according to any one of (Appendix 1) to (Appendix 3), wherein
the piping is composed of at least one material of a material group consisting of a pipe, a fitting, a flange, and a valve constituting the plant, and
in the step of receiving an input of designated coordinates,
a connection part between materials is set as a candidate for a position of the boundary.

### (Appendix 5)

The program according to any one of (Appendix 1) to (Appendix 4), wherein
in the step of receiving an input of designated coordinates,
an input of designated coordinates is received for a material constituting an object in which piping is arranged in advance in the instrument constituting the plant.

### (Appendix 6)

The program according to any one of (Appendix 1) to (Appendix 5), wherein
in the step of receiving an input of designated coordinates,
a plurality of piping lines having different identification information are displayed in different colors based on the identification information.

### (Appendix 7)

A program executed by a computer comprising a processor to automatically and manually route piping, wherein
the program causes the processor to execute:
a step of receiving, from a user, an operation to arrange a first object corresponding to an instrument having information on a start point and a second object corresponding to an instrument having information on an end point in a virtual space for designing a plant;
a step of receiving an input of designated coordinates in the virtual space; and
a step of routing piping so that the start point and the end point are connected via a path point defined by the designated coordinates.

### (Appendix 8)

A method executed by a computer comprising a processor, the method comprising
the processor executing:
a step of receiving an input of designated coordinates for a piping line routed so as to connect a plurality of instruments constituting a plant to each other in a virtual space for designing a plant; and
a step of assigning a plurality of pieces of identification information to the piping line using the input designated coordinates as a boundary.

### (Appendix 9)

A system comprising a control unit, wherein
the control unit includes:
means for receiving an input of designated coordinates for a piping line routed so as to connect a plurality of instruments constituting a plant to each other in a virtual space for designing a plant; and
means for assigning a plurality of pieces of identification information to the piping line using the input designated coordinates as a boundary.

### (Appendix 10)

A method executed by a computer comprising a processor to automatically and manually route piping, the method comprising:
the processor executing:
a step of receiving, from a user, an operation to arrange a first object corresponding to an instrument having information on a start point and a second object corresponding to an instrument having information on an end point in a virtual space for designing a plant;
a step of receiving an input of designated coordinates in the virtual space; and
a step of routing piping so that the start point and the end point are connected via a path point defined by the designated coordinates.

### (Appendix 11)

A system comprising a control unit, wherein
the control unit includes:
means for receiving, from a user, an operation to arrange a first object corresponding to an instrument having information on a start point and a second object corresponding to an instrument having information on an end point in a virtual space for designing a plant;
means for receiving an input of designated coordinates in the virtual space; and
means for routing piping so that the start point and the end point are connected via a path point defined by the designated coordinates.

### EXPLANATION OF REFERENCE NUMERALS

1: system
10: terminal apparatus
20: server
80: network
130: operation reception unit
161: user information
22: communication IF
23: input/output IF
25: memory
26: storage
29: processor
201: communication unit
202: storage unit
203: control unit
301: communication unit
302: storage unit
303: control unit

## Claims

1. A program executed by a computer comprising a processor to automatically and manually route piping, wherein
the program causes the processor to execute:
a step of receiving an input of designated coordinates for a piping line routed so as to connect a plurality of instruments constituting a plant to each other in a virtual space for designing a plant; and
a step of assigning a plurality of pieces of identification information to the piping line using the input designated coordinates as a boundary.

2. The program according to claim 1, wherein
the program further causes the processor to execute:
a step of receiving an input of an attribute relating to the piping line from the user for each of the pieces of identification information assigned.

3. The program according to claim 2, wherein an input of a design group in which a design value selected from at least one of groups of pressures, temperatures, fluids, etc. for designing the plant and at least one material of a material group consisting of a pipe, a fitting, a flange, and a valve constituting the plant are defined as a specific group is received as the attribute.

4. The program according to any one of claims 1 to 3, wherein
the piping is composed of at least one material of a material group consisting of a pipe, a fitting, a flange, and a valve constituting the plant, and
in the step of receiving the input of the designated coordinates,
a connection part between the materials is set as a candidate for a position of the boundary.

5. The program according to any one of claims 1 to 4, wherein
in the step of receiving the input of the designated coordinates,
the input of designated coordinates is received for a material constituting an object in which piping is arranged in advance in the instrument constituting the plant.

6. The program according to any one of claims 1 to 5, wherein
in the step of receiving the input of the designated coordinates,
a plurality of the piping lines having different identification information are displayed in different colors based on the identification information.

7. A program executed by a computer comprising a processor to automatically and manually route piping, wherein
the program causes the processor to execute:
a step of receiving, from a user, an operation to arrange a first object corresponding to an instrument having information on a start point and a second object corresponding to an instrument having information on an end point in a virtual space for designing a plant;
a step of receiving an input of designated coordinates in the virtual space; and
a step of routing piping so as to connect the start point and the end point via a path point defined by the designated coordinates.

8. A method executed by a computer comprising a processor, the method comprising:
the processor executing:
a step of receiving an input of designated coordinates for a piping line routed so as to connect a plurality of instruments constituting a plant to each other in a virtual space for designing a plant;
a step of assigning a plurality of pieces of identification information to the piping line using the input designated coordinates as a boundary.

9. A system comprising a control unit, wherein
the control unit includes:
means for receiving an input of designated coordinates for a piping line routed so as to connect a plurality of instruments constituting a plant to each other in a virtual space for designing a plant; and
means for assigning a plurality of pieces of identification information to the piping line using the input designated coordinates as a boundary.

10. A method executed by a computer comprising a processor to automatically and manually route piping, the method comprising:
the processor executing:
a step of receiving, from a user, an operation to arrange a first object corresponding to an instrument having information on a start point and a second object corresponding to an instrument having information on an end point in a virtual space for designing a plant;
a step of receiving an input of designated coordinates in the virtual space; and
a step of routing piping so that the start point and the end point are connected via a path point defined by the designated coordinates.

11. A system comprising a control unit, wherein
the control unit includes:
means for receiving, from a user, an operation to arrange a first object corresponding to an instrument having information on a start point and a second object corresponding to an instrument having information on an end point in a virtual space for designing a plant;
means for receiving an input of designated coordinates in the virtual space; and
means for routing piping so that the start point and the end point are connected via a path point defined by the designated coordinates.
